# EUROPEAN PATENT APPLICATION

(11) **EP 3 881 964 A1**
(43) Date of publication of application: **22.09.2021**
(21) Application number: 20163511.7
(22) Date of filing: 17.03.2020
(51) Int. Cl.: B23K 31/02, B23K 37/02, E02B 17/02, F03D 13/25, F16B 7/02, B23K 101/06, B23K 103/04

(54) **METHOD OF CONNECTING BY WELDING TWO SECTIONS OF A STRUCTURE, ESPECIALLY OF A WIND TURBINE, AND CORRESPONDING CONNECTION TOOL**

(71) Applicant: Siemens Gamesa Renewable Energy A/S, 7330 Brande (DK)
(72) Inventor: Skjaerbaek, Poul, 6920 Videbaek (DK); Soerensen, Johnny, 6920 Videbæk (DK)
(74) Representative: Aspacher, Karl-Georg

(57) **Abstract**

The present application relates to a method of connecting two tubular or conical sections (1, 2) of a structure, especially of a wind turbine, by joining respective circular ends (11, 12) of the outer walls (13, 14) of these sections (1, 2) by welding, comprising the steps: positioning the two sections (1, 2) in such a way, that the circular ends (11, 12) are adjacent to each other, positioning a first part (7) of a connection tool (6) adjacent to the circular ends (11, 12) of the two sections (1, 2), positioning a second part (8) of the connection tool (6) in such a way that the first and second part (7, 8) of the connection tool (6) form a ring-shaped housing, blocking access to the circular ends (11, 12) from the outside of the sections (1, 2), and using a welding head (22) of the connection tool (6) arranged within the ring-shaped housing to join the outer walls (13, 14) of the sections (11, 12) by welding.

## Description

The invention concerns a method for connecting two tubular or conical section of a structure, especially of a wind turbine, by joining respective circular ends of the outer walls of these sections by welding. Additionally the invention concerns a connection tool for such a connection.

The tower and in case of an offshore construction also the base of a wind turbine are typically constructed from multiple vertical sections, since the full length of the tower would be very hard to transport and handle. The most common approach for connecting these sections is to provide flanges on the ends of the sections and to use bolting to connect these flanges with each other. A connection of sections by flanges can be disadvantageous, since the flanges add additional weight to the tower and increase material use. It might also be necessary to regularly service such a tower, since bolts might need to be retightened. The use of flanges also leads to a surface shape deviating from an ideal surface shape, therefore adding even more weight.

One approach to avoid the use of flanges are so called slip joints that are e.g. disclosed in the documents EP 2 910 686 A2 and EP 3 255 210 A2. When such joints are used, the inner diameter of an opening at the bottom of a higher section is larger than the outer diameter of the lower section on which the higher section is placed. The higher section can therefore slip onto the lower section. The downward slip of the higher section is limited by the conical shape of the sections or additional features on the inner wall of the upper section or the outer wall of the lower section. While slip joints have some advantages over flange connections, they can also increase the weight of the tower, since the sections need to partially overlap. The use of slip joints also places certain limitations on the available surface shapes, therefore necessitating a potentially non-optimal surface shape.

The mentioned problems can be avoided when the different sections are welded to each other. Welded connections provide a very good strength, can allow for an optimum surface shape and do essentially not add additional weight. For these reasons welding is already used when shorter sections are preassembled in a factory to build larger sections that are assembled on-site, e.g. by the previously mentioned flange connections or slip joints. Using welded connections when the welding is performed on-site is however problematic, since the welding area needs to be clean and dry and therefore a controlled environment needs to be provided. This requires an at least partial recreation of the factory conditions on the construction site or a quay side where the segments are delivered. Therefore rather elaborate local infrastructure is required to perform a connection of segments by welding in a reasonable timeframe. For economic and time reasons this is only reasonable in rare cases, e.g. when constructing large wind parks.

It is therefore the object of the present invention to provide an improved approach for connecting sections of a structure, especially of a wind turbine, that avoids the discussed problems.

The problem is solved by a method for connecting two tubular or conical sections of a structure, especially of a wind turbine, by joining respective circular ends of the outer walls of these sections by welding, comprising the steps:
- positioning the two sections in such a way, that the circular ends are adjacent to each other,
- positioning a first part of a connection tool adjacent to the circular ends of the two sections,
- positioning a second part of the connection tool in such a way that the first and second part of the connection tool form a ring-shaped housing, blocking access to the circular ends from the outside of the sections, and
- using a welding head of the connection tool arranged within the ring-shaped housing to join the outer walls of the sections by welding.

The invention is based on the idea of using a mobile housing to locally create a reasonably well controlled environment in the area, in which welding is to be performed. The welding head is integrated into the connection tool that is used to form this housing. Therefore a reasonably transportable tool can be provided that still allows a welding process to be performed in similar conditions as in a dedicated factory. Therefore the previously discussed advantages of connecting sections of a structure, especially a wind turbine, by welding can be achieved without the requirement of a dedicated factory complex on-site.

The method can be used to connect tubular or conical sections of any structure, especially of any steel structure. The sections can e.g. be different sections of a wind turbine tower or one of the sections can be a foundation, e.g. a monopile or jacket, and the other one can be the tower or a lower section of the tower that is welded to this foundation using the inventive method. The inventive method can also be used to connect a tower to a transition piece and/or a transition piece to a foundation during the construction of a wind turbine. The method can be used while the sections lie horizontally, e.g. for connecting tower sections, or while they stand vertically, e.g. for connecting a tower or a tower section to a monopile. The method can be used onshore and offshore. The use of the inventive method especially allows for the use of welding instead of a flange connection, thereby achieving the previously mentioned advantages without requiring a dedicated factory complex on-site.

As will be discussed in more detail below, the use of a dedicated connection tool can also allow for the performance of additional processing steps before or after the welding. The welding and optionally the additional processing steps can even be performed automatically or semi-automatically and the results can be checked by sensors integrated into the connection tool. Therefore a highly efficient workflow for connecting sections of a wind turbine on-site can be achieved.

The ring-shaped housing can tightly connect to the outside of the walls of the sections. Therefore the inside of the ring-shaped housing and therefore the area in which welding is performed is only open to the environment via the slight gap that remains between the ends of the outer walls. It can therefore be typically avoided that fluids or dirt enter this area once it is cleaned and the temperature and humidity in this area can be reasonably well controlled. The controlled connection to the environment can be provided by the connection tool, e.g. to blow dry air into the ring-shaped housing to ensure that the welding area is dry.

Preferably an elastic seal is used between a respective main body of the first and second part of the connection tool and the respective outer wall of the sections. This can ensure that fluids can not enter the ring-shaped housing while this connection exists and help to improve the temperature control within the ring-shaped housing.

The circular ends of the sections have approximately the same diameter so that they can be connected by welding. The welding is preferably performed along the full circumference.

After the initial positioning of the sections a small gap, e.g. in a range between 0.1 mm and 10 mm can remain. Small gaps can be closed during the welding process. It might however also be possible to improve the alignment using actuators of the connection tool as discussed below.

The ring-shaped housing can have an extension in the axial direction of e.g. 1 m. This can allow devices within the connection tool to access a length of the sections of e.g. 0.5 m to 0.75 m. This can be relevant when the connection tool is also used to perform additional processing steps like applying an antioxidation coating to the outer walls in this area. It can be advantageous to use sections that do not have an antioxidation coat in the area in which welding should be performed. The antioxidation coating can then be applied after the welding, preferably automatically by the connection tool.

The first and second part of the connection tool can be connected by a mechanism, especially a hinge, wherein the position of the second part relative to the first part can be modified by an actuator to position the second part to form the ring-shaped housing. Closing the connection tool by an actuator of the connection tool itself to form the ring-shaped housing can be advantageous, since the connection tool and therefore the first and second part can be rather large and heavy. Manually attaching the individual parts to the sections might therefore be time consuming and require additional tools, e.g. a crane.

It is e.g. possible to position the first part of the connection tool by a transportation vehicle, especially a self-propelled modular transporter (SPMT). SPMTs can essentially move freely in any direction within the horizontal plane. It is therefore possible to support the sections to be connected in such a way that the transporter with the attached connection tool can be driven below the area where the circular ends of the outer walls meet. The height of the first part can e.g. be controlled by a lifting platform. Once the first part is placed such that it surrounds the lower half of the sections, the ring-shaped housing can be closed by using the actuator. The positioning of the first and second part of the connection tool can therefore be performed by remote control or even automatically.

Similar advantages can be achieved when the first part is positioned by a ship, a crane or some other device.

In an alternative embodiment it would e.g. be possible to separately position the first and second part and then connect the parts, e.g. by flanges, to form the connection tool.

The first and second part of the connection tool can form a track for the welding head running essentially parallel to the circular ends of the two sections after the second part is positioned to form the ring-shaped housing. The welding head can then be moved along that track to form a welding seam joining the walls of the sections. The angle between the circular ends and the track can be within a tolerance of 5° or 3° or 1°. Preferably small tolerances are used to allow for the use of a relatively slim welding seam. It would also be possible to add a mechanism for a slight modification of the axial position of the welding head to compensate for a misalignment between the track for the welding head and the circular ends.

The temperature and/or humidity in the ring-shaped housing can be modified by an environment control means of the connection tool prior to the joining of the outer walls by welding. The environment control can also be performed prior to a preparation step, especially at least one of the additional processing steps mentioned below, to e.g. already provide a controlled environment for a surface preparation or an investigation of the surface by sensors.

A temperature can e.g. be modified by a heater, in the simplest case a resistive heater. The humidity can e.g. be modified by blowing dried air into the ring-shaped housing or by evaporating water into the housing. A multitude of approaches for controlling the temperature and/or humidity in an essentially closed environment is known from the prior art and can be used within the scope of the inventive method.

The connection tool can also be used to apply an added layer to and/or to treat the outer surface of the walls and/or the welding seam and/or to acquire sensor data concerning the walls and/or the welding seam and/or the added layer in a respective additional processing step performed while the ring-shaped housing is formed by the first and second part of the connection tool. Therefore the additional processing steps can be performed in a controlled environment. Devices used in the respective processing steps can be completely or at least partially mounted within the ring-shaped housing. Some of the discussed processing steps might require additional material to be fed into the ring-shaped housing and/or the removal of waste from the ring-shaped housing. For this processes and devices used in these processes additional containers outside of the ring-shaped housing can be provided. These containers can e.g. be mounted to the connection tool itself or to a vehicle carrying the connection tool. Alternatively such containers can simply be placed next to the working area and connected to respective interfaces of the connection tool.

In most cases devices used in the processing step should be able to move along a circumference of the sections to investigate or treat the area of the ends of the outer walls from all sides. A simple way to achieve this is to mount each of the used devices on a dedicated track that extends around the circumference of the ring-shaped housing. It is also possible to use a common track for multiple devices, use the track used for the welding head for at least one of the devices and/or to switch different devices to a given track. It might also be advantageous to move at least some of the devices and/or the welding head to a protected area during some of the processing steps, e.g. during a sandblasting, to avoid excessive wear and tear on these devices.

Various surface treatments, e.g. a sandblasting and/or grinding, can be used. Sandblasting the area of the ends of the outer walls can be advantageous to remove dirt and/or rust. Similar results can be achieved by grinding. Grinding can also be used after the welding to grind down the welding seam to achieve an optimal surface shape of the outer surface of the structure, e.g. the wind turbine.

A layer can especially be added after the welding, e.g. a coat of paint, especially an antioxidation paint, can be applied. Alternatively the welding can be protected by attaching a crimping band. To ensure a good connection between the sections and the crimping band, the inside of the crimping band can be covered by a glue layer that can then be heated.

Sensor data can be acquired by various devices, e.g. by a camera, an x-ray sensor and/or an ultrasound sensor. The acquisition of sensor data can be used to control the welding or other processing steps. It might e.g. be possible to recognize a misalignment of a track used to move the welding head or another device along the circumference of the section and to compensate this misalignment by e.g. an added lateral movement. The acquisition of sensor data is however especially relevant for documenting the connection process which might be relevant for later servicing and maintenance, liability questions etc. For this purpose the acquired raw data can be stored. It is however preferable to automatically evaluate the acquired data which e.g. allows for an automatic generation of a report, especially in a human readable format or in a format used by commonly used reader software. Such a report can e.g. be automatically send by email or by some other communication means, e.g. to a smartphone or another communication device of a user.

At least one additional processing step, preferably multiple additional processing steps, can be performed automatically before and/or after the welding is performed. The connection tool can perform all necessary steps for connecting the tubular or conical sections, including surface preparation, the welding, post welding surface treatment and an automatic inspection of preferably every operation performed, especially providing digital output data concerning the inspection.

A possible automatical workflow could e.g. include an initial check of the material in the relevant area, e.g. to check an alignment of the sections, an initial surface quality, etc. After the initial check the surface can be treated, especially cleaned by sandblasting and/or grinding. The treated surface can then again be checked by acquiring sensor data. After this second check the welding can be performed and additional sensor data can be acquired to check the weld. Further surface treatment can then be applied, e.g. a layer of antioxidation paint can be applied. This treatment can then again be checked by acquiring sensor data, e.g. to determine a thickness of the applied coat. Obviously the discussed workflow can be modified, e.g. by adding additional steps, removing some of the steps, etc.

The connection tool can be used to connect several pairs of sections of structures, especially of wind turbines, wherein at least two of the pairs have different diameters of the respective circular ends of the outer walls to be joined, wherein a seal between the ring-shaped housing and the respective outer walls and/or a radial position of the welding head and/or of a device used in the additional processing step or in at least one of the additional processing steps are chosen depending on the diameter of the respective circular ends to be connected. This allows the use of the same connection tool or at least the use of the same main body of the connection tool for connecting a wide verity of sections.

This can e.g. be advantageous, since the diameters of the circular ends of the outer walls of sections tend to vary along the tower of a wind turbine, e.g. when a conical tower shape is used. In this case the diameters vary by a relatively small degree, e.g. by approximately 10 %. It can e.g. be sufficient to allow the connection tool to work with the diameters between 7, 5 m and 8 m. For these relatively small variations in diameter it might not be necessary to swap the seal between the ring-shaped housing and the outer walls. When the radial position of the welding head and/or the respective device can be automatically adjusted, e.g. when the radial position can be determined by an actuator, it is possible to adjust the connection tool by a remote control or even automatically for different diameters. To perform an automatic control it would e.g. be possible to acquire images or other sensor data concerning the sections of the structure, e.g. of the wind turbine, to be connected and to determine the diameter from that information.

Advantageously a connection tool is used, that can handle larger differences in diameter, e.g. between 7, 5 m and 10 m. This allows for an additional flexibility and e.g. allows the use of the same connection tool for different wind turbines with different tower geometries.

The radial position of a welding head and/or a device can e.g. be adjusted by an actuator as discussed above. E.g. a telescopic holder can be used that is extended or contracted by the actuator. It is also possible to adjust the radial position manually, e.g. by using a telescopic holder with fixing screws, a snap-in nose with several snap-in positions, etc. In principle it is also possible to switch the used holder or the complete device to adjust the radial position.

It might not be necessary to adjust the radial position of all devices. Some devices might be less sensitive to a distance between the device and the wall. E.g. a nozzle for sandblasting can work over a wide range of distances between the nozzle and the wall. This might also be true for a nozzle for coating the walls with paint. For sensors or emitters used with sensors the relevance of the radial position depends on the type of sensor. E.g. a video camera for checking alignment might work over a wide range of distances between the walls and the camera. Other sensors, e.g. ultrasound sensors for checking properties of the weld, should contact the wall and therefore the radial position might need to be adjusted.

An initial gap between the ends of the outer walls and/or an angle between the outer walls of the sections after the positioning of the two sections can be reduced by actuating the or an actuator of the connection tool. In the simplest case the actuator used to position the second part also reduces the initial gap by the discussed positioning of the second part. It is e.g. possible to correct a slight misalignment of the sections by clamping the sections by the first and second part while forming the ring-shaped housing. It is however also possible to use additional actuators, e.g. wheels or other means for pushing and pulling the sections in the longitudinal direction and/or pushrods or similar means for optimizing alignment. The use of such additional actuators can especially be advantageous when the initial positioning of the sections and/or the initial gap is determined from sensor data and the sensor data is evaluated to provide control data for these additional actuators.

The first part of the connection tool can be positioned using a wheeled and/or tracked transport or a ship. The wheeled transport can e.g. be a self-propelled modular transporter (SPMT). This e.g. allows for a flexible movement of the first part or especially of the full tool around a harbour area or some other relevant area having various surfaces and/or environments. An example for positioning the connection tool by such a transport was already mentioned previously and will later be explained in more detail in an example. The use of a connection tool on a ship can especially be advantageous to directly weld tower sections or other sections of a wind turbine to a foundation, e.g. a monopile. While the connection tool can in principle be mounted to a fixed position of the ship, it is advantageous to allow a relative movement between ship and connection tool, e.g. by mounting the connection tool to a crane, a robotic arm or similar means.

Additionally or alternatively the sections can be positioned in such a way that the longitudinal direction of the sections extends in the horizontal or vertical direction during the welding. A horizontal positioning can be advantageous to connect tower sections while the tower is still in a horizontal position. A vertical orientation can e.g. be used to connect a tower section to an existing foundation, e.g. a monopile or jacket, or to an already erected tower section. This can e.g. be advantageous for offshore construction.

The transport or ship can also carry additional components, e.g. the previously mentioned supply and/or waste containers, an energy supply, etc. The device can be modular, e.g. containers or certain devices can only be included when relevant processing steps should be used.

The invention also concerns a connection tool for connecting two tubular or conical sections of a structure, especially a wind turbine, by joining respective circular ends of the outer walls of these sections by welding, comprising:
- a first and second part of the connection tool, each forming a segment of a ring-shaped housing, the first and second part being connected by a mechanism for pivoting the second part with respect to the first part to open and close the ring-shaped housing, wherein the closed ring-shaped housing blocks access to the circular ends from the outside of the sections when the complete circumference of each axial end of the ring-shaped housing contacts the outer wall of a respective one of the sections,
- a welding head,
- a track for the welding head running along the inside of the ring-shaped housing, when the ring-shaped housing is closed, and
- an actuator for moving the welding head along the track to create a welding seam connecting the sections.

The connection tool can especially be used in the previously discussed method. Features discussed with respect to the method according to the present invention can be transferred to the connection tool with the mentioned advantages and vice versa.

The mechanism for pivoting the second part with respect to the first part allows an opening of the ring-shaped housing and therefore a radial movement of the connection tool with respect to the sections. This e.g. allows the first part to be placed adjacent to the area where the circular ends of the outer walls of the sections meet and then pivot the second part to close the ring-shaped housing around this area, therefore providing a controlled environment for the welding and/or other processing steps as discussed above.

The axial ends of the ring-shaped housing can be formed using at least one elastic seal. Such a seal can be compressed when the ring-shaped housing is closed by pivoting the second part. It can block a passage of fluid and strongly reduce or block a passage of air along the outer surface of the walls of the section into or out of the ring-shaped housing. Therefore the seal can support the creation of a controlled environment for the welding and/or the additional processing steps.

The connection tool can additionally or alternatively comprise environment control means for modifying the temperature and/or the humidity in the closed ring-shaped housing. Examples for such environment control means were already discussed with respect to the method according to the present invention.

The connection tool can comprise a respective device for applying an added layer to and/or treating the outer surface of the walls and/or the welding seam and/or for acquiring sensor data concerning the walls and/or the welding seam and/or the added layer in a respective additional processing step. The connection tool can especially be modular, such that the mentioned devices or a subgroup of these devices can be added and removed as necessary. The connection tool can comprise at least one additional track for a respective device running along the inside of the ring-shaped housing, while the ring-shaped housing is closed. Alternatively multiple of the devices can be placed on the same track, the connection tool can comprise a mechanism for switching different devices and/or the welding head onto a certain track or remove them from a track, etc. Possible devices for the discussed processing steps were already discussed with respect to the previously discussed method.

The connection tool can comprise a control unit that is designed to control the actuator and the welding head to join the outer walls by welding in a welding step and to control the respective device in the respective additional processing step performed before and/or after the welding step. Preferably the control unit can control the welding head and multiple devices to automatically perform a series of additional processing steps and the welding step in a given sequence. Examples for such sequences were already discussed with respect to the previously discussed method.

The control unit can additionally or alternatively control an actuator used to move the second part of the connection tool to close the ring-shaped housing and/or check, e.g. via a sensor, if the ring-shaped housing is closed. An automatic sequence of processing steps can then be triggered once the housing is closed. The processing can also be semi-automatic, e.g. it is possible to have a user supervising the process and e.g. provide him with a report concerning acquired sensor data and/or previous processing steps so that the user can decide to proceed to the next step or to e.g. repeat a previous step, modify a step, etc.

In general the control unit can be designed to evaluate at least part of the sensor data and to generate a report based on this evaluation. The report can be an intermediate report before the processing of the sections by the connection tool is finished. Such an intermediate report can provide a user with information, if the processing should proceed, be modified etc. as discussed above.

The connection tool can provide functionality for generating digital data concerning the quality and/or inspection results of the connection. All data concerning the connection process can be available after the connection and can e.g. allow for full transparency of the production process for the customer. A generated report can e.g. automatically highlight parameters that are close to or outside given boundaries for acceptable tolerances.

Preferably a report is generated concerning the full processing of the sections by the connection tool. Such a report can e.g. concern information about an initial state of the sections to be connected, a state of the welding area once preparatory steps are completed, e.g. a cleaning by a sandblasting etc., information concerning the welding seam, e.g. acquired by an x-ray sensor and/or an ultrasound sensor, and information concerning a further surface treatment, e.g. the thickness of an applied coat of paint. The report can be output by an interface, e.g. written as a file to a temporary or permanent storage, sent by a network or to an output device, e.g. a screen etc. The report can especially be in a human readable format or it can be generated in a format that can be read by common reader software.

The connection tool can comprise a further mechanism for adjusting the radial position of the welding head and/or the device or at least one of the devices used in the at least one additional processing step. This mechanism can be used to adjust the connection tool for different diameters of circular ends of outer walls to be connected by welding. This was already discussed with respect to the described method. The mechanism can comprise an actuator for automatically adjusting the radial position or the position can be manually adjusted by a user using this mechanism. The connection tool can comprise sensors or other means for acquiring data concerning the sections to be connected, especially concerning the diameter of the circular ends of the outer walls of these sections and the control unit can be designed to automatically adjust the radial position of the welding head and/or at least one of the devices based on this information, e.g. by controlling an actuator of the respective mechanism.

The invention also concerns an arrangement of two tubular or conical sections of a structure, especially of a wind turbine, and the described connection tool. Previously discussed features of the method and the connection tool can also be implemented for the arrangement with the discussed advantages.

Other objects and features of the present invention will become apparent from the following detailed description considered in conjunction with the accompanying drawings. The drawings, however, are only principle sketches designed solely for the purpose of illustration and do not limit the invention. The drawings show:

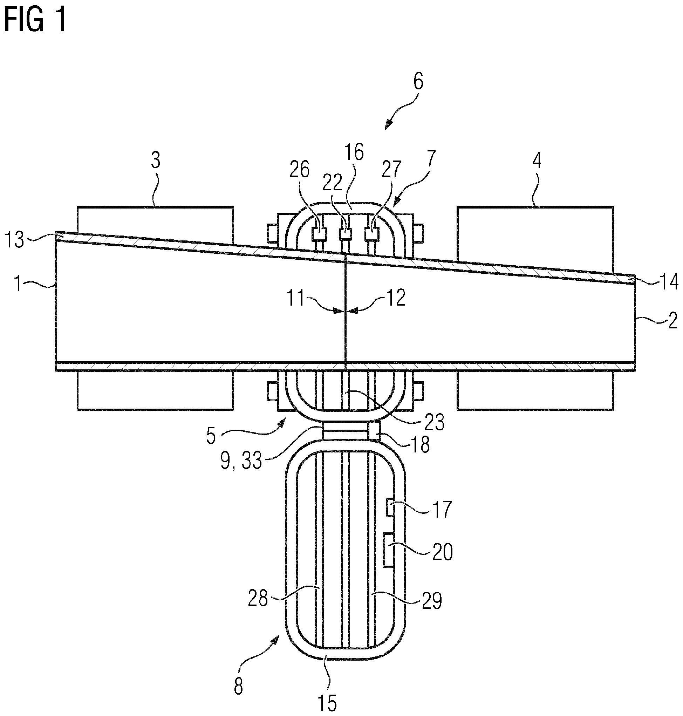

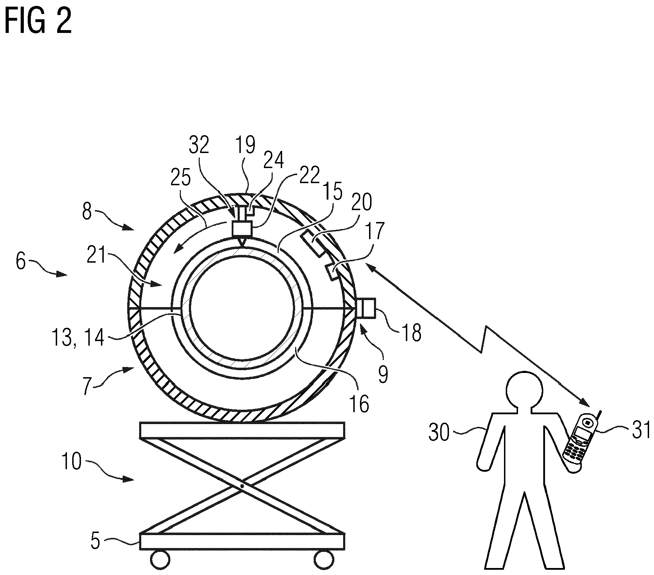

- Fig. 1 and 2: an arrangement of two conical sections of a wind turbine and an embodiment of a connection tool according to the present invention at two different times while an embodiment of the method according to the present invention is performed.

A method for connecting two conical sections 1, 2 of a structure, especially a wind turbine, will be discussed with reference to figures 1 and 2 that show the state of a connection tool 6 during different steps of the method. In the example two sections 1, 2 of a wind turbine tower are connected. Initially the sections 1, 2 that should be connected are placed on supports 3, 4 and positioned in such a way that the circular ends 11, 12 of the outer walls 13, 14 of these sections 1, 2 are adjacent. A first part 7 of the connection tool 6 is then positioned adjacent to the circular ends 11, 12 to allow access to the region where a welding seam is to be placed. In the example shown in figures 1 and 2 the first part 7 of the connection tool 6 is attached to a wheeled transport 5 via a lifting platform 10. The transport 5 can be a self-propelled modular transport that essentially allows an arbitrary movement within the horizontal plane. By lowering the first part 7, then positioning the transport 5 below the relevant area and then lifting the first part 7, the first part 7 can place in such a way that an elastic seal 16 contacts the outside of the outer walls 13, 14 of the sections 1, 2.

The connection tool 6 can then be closed by positioning a second part 8 of the connection tool 6 in such a way that the first and second part 7, 8 of the connection tool 6 form a ring-shaped housing 19, blocking access to the circular ends 11, 12 from the outside of the sections 1, 2. When the second part 8 is positioned as shown in fig. 2, the elastic seal 15 of the second part 8 also contacts the outer walls 13, 14 of the sections 1, 2. The interface between the respective section 1, 2 and the connection tool 6 is therefore sealed on both radial ends, essentially avoiding an exchange of fluid and/or air in these areas. Except for a controlled exchange of fluid and/or air by the environmental control means 20 of the connection tool 6 or other devices 26, 27 used within the connection tool 6, such an exchange is therefore only possible via a rather small gap between the circular ends 11, 12 of the outer walls 13, 14 of the sections 1, 2.

The first and second part 7, 8 of the connection tool 6 are connected via a mechanism 33, namely a hinge 9, and the second part 8 can be pivoted with respect to the first part 7 by an actuator 18 that is controlled by the control unit 17. By moving the second part 8 from the position shown in fig. 1 to the position shown in fig. 2, an alignment of the sections 1, 2 can be further improved by e.g. correcting minor misalignments due to forces exerted by the closing of the connection tool 6. Alternatively a further modification of the alignment of the sections 1, 2 would be possible by using additional actuators not shown in the example.

Once the ring-shaped housing 19 is formed by closing the connection tool 6, as shown in fig. 2, controlled conditions can be created within an inner volume 21 of the ring-shaped housing 19 by the environment control means 20. The environment control means 20 can e.g. comprise a heater and an ability to exchange the air within the ring-shaped housing 19, especially for feeding in dry air to control humidity within the ring-shaped housing 19.

Once a controlled environment is provided it would in principle be possible to directly use a welding head 22 to form a welding seam along the circumference of the ends 11, 12 of the outer walls 13, 14 of the sections 1, 2 to connect the sections 1, 2 by welding. To achieve this the welding head 22 can be moved along a track 23 by an actuator 24 as indicated in fig. 2 by the arrow 25. The sections of the track 23 running within the first and second parts 7, 8 of the connection tools 6 are shown in fig. 1. The track itself is not shown in fig. 2 for reasons of clarity. The actuator 24 and the welding head 22 itself can be controlled by the control unit 17.

Preferably additional processing steps are performed while the ring-shaped housing 19 is closed. Typically additional processing steps are used before and after the welding step. To allow for these additional processing steps additional devices 26, 27 are arranged within a ring-shaped housing 19. For reasons of clarity and simplicity only two additional devices 26, 27 are shown in the figures. To allow for an access to the surface of the sections 1, 2 from all directions, the devices 26, 27 can be places on additional tracks 28, 29 of the connection tool 6. The devices 26, 27 can be devices for surface processing, e.g. a nozzle for sandblasting or applying a coat of paint or tools for grinding the surfaces of the sections 1, 2 prior to the welding or for grinding down the welding seam to provide an optimal surface shape in the area of the welding seam. Preferably at least one of the devices 26, 27 can be a sensor, e.g. an ultrasound sensor, an x-ray sensor or a camera, to acquire sensor data about the state of the surfaces of the sections 1, 2 and/or the welding seam and/or an additional layer, e.g. a coat of paint applied to the surfaces 1, 2 and the welding seam.

The control unit 17 can control the devices 26, 27, the welding head 22 and the actuator 24 as well as additional actuators for moving the devices 26, 27 to perform a series of processing steps and a welding step. It is possible to automatically perform the sequence of steps once the ring-shaped housing 19 is closed and certain environment conditions are established. It is also possible that a user 30 can interact with the connection tool 6, e.g. via a mobile device 31, to e.g. decide if certain processing steps should be repeated, change the parametrization of certain processing steps, check certain acquired sensor data, etc. To support the user 30 it is possible to provide intermediate reports depending on acquired sensor data via the control unit 17.

In an example the processing sequence can comprise a first surface preparation, e.g. by sandblasting and/or grinding using the devices 26, then an automatic welding with the welding head 22 and then a further surface treatment, e.g. a coating of the surface by an antioxidant paint using the device 27. Prior to each of these steps and after the surface treatment sensor data can be acquired by additional devices to e.g. gather information about an initial state of the outer surface of the sections 1, 2 in the welding area, the state of this area after a cleaning of the surface, the quality of the weld, a thickness of an applied coat, etc. This data can at least partially be evaluated by the control unit 17 and the control unit 17 can generate a report that can be provided to a user 30, e.g. via the mobile device 31.

Once all relevant processing steps are finished the connection tool 6 can be opened with the actuator 18 and then removed using the transport 5.

When the connection tool 6 is used to perform multiple welding operations along a conical tower of a wind turbine or when the connection tool 6 is to be used for different types of towers, foundations, etc., it should be adjustable for different diameters of the ends 11, 12 of the outer walls 13, 14 to be connected. Small variations in the diameter can be compensated by different degrees of compression of the elastic seals 15, 16. The radial position of the welding head 22 can e.g. be adjusted by a mechanism 32. The adjustment can be manual. E.g. the mechanism 32 can be a telescoping holder for the welding head 22 and the length of the telescopic holder 32 can be manual adjusted. Preferably the adjustment is however performed by an actuator that is part of the mechanism 32. In this case the radial position can then be automatically adjusted, e.g. by recognizing which sections 1, 2 are to be connected by a video camera or other sensors of the connection tool 6 and automatically adjusting the radial position of the welding head 22 accordingly. Similar approaches can be used to adjust the radial positions of the devices 26, 27.

If the diameters of the open ends 11, 12 of the walls 13, 14 to be connected vary strongly, e.g. in a range of 7, 5 m and 10 m, it might be advantageous to replace the elastic seals 15, 16 with different elastic seals 15, 16 to create a better fit for a wide variety of possible diameters.

The use of a wheeled transport and the performance of the welding while the sections 1, 2 are lying horizontally are purely exemplary. Alternatively the connection tool 6 might e.g. be mounted to a ship, especially via a crane, a robotic arm or similar devices to allow a controlled placement of the first section 7. This might be necessary to perform offshore welding tasks. The welding might also be performed while the sections are vertical, e.g. to connect a tower section to an already mounted monopile.

Although the present invention has been described in detail with reference to the preferred embodiment, the present invention is not limited by the disclosed examples from which the skilled person is able to derive other variations without departing from the scope of the invention.

## Claims

1. Method for connecting two tubular or conical sections (1, 2) of a structure, especially of a wind turbine, by joining respective circular ends (11, 12) of the outer walls (13, 14) of these sections (1, 2) by welding, comprising the steps:
- positioning the two sections (1, 2) in such a way, that the circular ends (11, 12) are adjacent to each other,
- positioning a first part (7) of a connection tool (6) adjacent to the circular ends (11, 12) of the two sections (1, 2),
- positioning a second part (8) of the connection tool (6) in such a way that the first and second part (7, 8) of the connection tool (6) form a ring-shaped housing (19), blocking access to the circular ends (11, 12) from the outside of the sections (1, 2), and
- using a welding head (22) of the connection tool (6) arranged within the ring-shaped housing (19) to join the outer walls (13, 14) of the sections (1, 2) by welding.

2. Method according to claim 1, **characterized in that** the first and second part (7, 8) of the connection tool (6) are connected by a mechanism (33), especially a hinge (9), wherein the position of the second part (8) relative to the first part (7) is modified by an actuator (18) to position the second part (8) to form the ring-shaped housing (19).

3. Method according to claim 1 or 2, **characterized in that** the first and second part (7, 8) of the connection tool (6) form a track (23) for the welding head (22) running essentially parallel to the circular ends (11, 12) of the two sections (1, 2) after the second part (8) is positioned to form the ring-shaped housing (19), wherein the welding head (22) is moved along that track (23) to form a welding seam joining the walls (13, 14) of the sections (1, 2) .

4. Method according to one of the preceding claims, **characterized in that** the temperature and/or humidity in the ring-shaped housing (19) are modified by an environment control means (20) of the connection tool (6) prior to the joining of the outer walls (13, 14) by welding.

5. Method according to one of the preceding claims, **characterized in that** the connection tool (6) is used to apply an added layer to and/or to treat the outer surface of the walls (13, 14) and/or the welding seam and/or to acquiring sensor data concerning the walls (13, 14) and/or the welding seam and/or the added layer in a respective additional processing step performed while the ring-shaped housing (19) is formed by the first and second part (7, 8) of the connection tool (6).

6. Method according to one of the preceding claims, **characterized in that** the connection tool (6) is used to connect several pairs of sections (1, 2) of structures, especially of wind turbines, wherein at least two of the pairs have different diameters of the respective circular ends (11, 12) of the outer walls (13, 14) to be joined, wherein a seal (15, 16) between the ring-shaped housing (19) and the respective outer walls (13, 14) and/or a radial position of the welding head (22) and/or of a device (26, 27) used in the additional processing step or in at least one of the additional processing steps are chosen depending on the diameter of the respective circular ends (11, 12) to be connected.

7. Method according to one of the preceding claims, **characterized in that** an initial gap between the ends (11, 12) of the outer walls (13, 14) and/or an angle between the outer walls (13, 14) of the sections (1, 2) after the positioning of the two sections (1, 2) is reduced by actuating the or an actuator (18) of the connection tool (6).

8. Method according to one of the preceding claims, **characterized in that** the first part (7) of the connection tool (8) is positioned using a wheeled and/or tracked transport (5) or a ship, and/or **in that** the sections (1, 2) are positioned in such a way that the longitudinal direction of the sections (1, 2) extends in the horizontal or vertical direction during the welding.

9. Connection tool for connecting two tubular or conical sections (1, 2) of a structure, especially of a wind turbine, by joining respective circular ends (11, 12) of the outer walls (13, 14) of these sections (1, 2) by welding, comprising:
- a first and second part (7, 8) of the connection tool (6), each forming a segment of a ring-shaped housing (19), the first and second part (7, 8) being connected by a mechanism (33) for pivoting the second part (8) with respect to the first part (7) to open and close the ring-shaped housing (19), wherein the closed ring-shaped housing (19) blocks access to the circular ends (11, 12) from the outside of the sections (1, 2) when the complete circumference of each axial end of the ring-shaped housing (19) contacts the outer wall (13, 14) of a respective one of the sections (1, 2),
- a welding head (22),
- a track (23) for the welding head (22) running along the inside of the ring-shaped housing (19), when the ring-shaped housing (19) is closed, and
- an actuator (24) for moving the welding head (22) along the track (23) to create a welding seam connecting the sections (1, 2).

10. Connection tool according to claim 9, **characterized in that** the axial ends of the ring-shaped housing (19) are formed using at least one elastic seal (15, 16).

11. Connection tool according to claim 9 or 10, **characterized in that** the connection tool (6) comprises an environment control means (20) for modifying the temperature and/or the humidity in the closed ring-shaped housing (19).

12. Connection tool according to one of the claims 9 to 11, **characterized in that** it comprises a respective device (26, 27) for applying an added layer to and/or for treating the outer surface of the walls (13, 14) and/or the welding seam and/or for acquiring sensor data concerning the walls (13, 14) and/or the welding seam and/or the added layer in a respective additional processing step.

13. Connection tool according to claim 12, **characterized in that** it comprises a control unit (17) that is designed to control the actuator (24) and the welding head (22) to join the outer walls (13, 14) by welding in a welding step and to control the respective device (26, 27) in the respective additional processing step performed before and/or after the welding step.

14. Connection tool according to claim 13, **characterized in that** the control unit (17) is designed to evaluate at least part of the sensor data and to generate a report based on this evaluation.

15. Connection tool according to one of the preceding claims, **characterized in that** it comprises a further mechanism (32) for adjusting the radial position of the welding head (22) and/or the device (26, 27) or at least one of the devices (26, 27) used in the at least one processing step.
